# EUROPEAN PATENT SPECIFICATION

(11) **EP 2 824 320 B1**
(45) Date of publication and mention of the grant of the patent: **22.02.2017**
(21) Application number: 14173812.0
(22) Date of filing: 25.06.2014
(51) Int. Cl.: F03D 1/06

(54) **Reduced noise vortex generator for wind turbine blade**
Geräuschreduzierter Wirbelerzeuger für Windturbinenschaufel
Générateur de vortex à bruit réduit pour pale d'éolienne

(30) Priority: 08.07.2013 US 201313936258
(43) Date of publication of application: 14.01.2015
(73) Proprietor: Siemens Aktiengesellschaft, 80333 München (DE)
(72) Inventor: Asheim, Michael J., Littleton, CO, 80120 (US); Enevoldsen, Peder Bay, 7100 Vejle (DK); Rimmington, Peter J., Superior, CO, 80027 (US); Singh, Manjinder J., Broomfield, CO, 80020 (US); Steingrimsson, Arni T., Steamboat Springs, CO, 80487 (US); Zamora Rodriguez, Alonso O., Boulder, CO, 80304 (US)
(74) Representative: Maier, Daniel Oliver

(56) References cited:
- EP-A1- 2 484 897
- US-A1- 2010 143 144
- US-A1- 2011 142 664
- JANISZEWSKA ET AL: "THREE DIMENSIONAL AERODYNAMICS OF A SIMPLE WING IN OSCILLATIONINCLUDING EFFECTS OF VORTEX GENERATORS", THESIS, , 1 January 2004 (2004-01-01), page 163pp, XP009166811, Retrieved from the Internet: URL:http://etd.ohiolink.edu/send-pdf.cgi/J aniszewska%20Jolanta%20M.pdf?osu1086190848
- GYATT G W: "DEVELOPMENT AND TESTING OF VORTEX GENERATORS FOR SMALL HORIZONTAL AXIS WIND TURBINES", DOE/NASA/0367-1, XX, XX, 1 July 1986 (1986-07-01), page A,B,C,01, XP000861589,

## Description

The invention relates to vortex generators on wind turbine blades, and particularly to such vortex generators shaped for noise reduction.

Vortex generators are known to be used to induce vortical flow structures that improve the performance of a wind turbine blade by entraining momentum from the free stream relative flow into the boundary layer, and consequently preventing or delaying flow separation on the wind turbine blade during operation, see e.g.EP-A1-2 484 897.

In accordance with a first aspect of the present invention, a vortex generator for a wind turbine blade comprises a fluid foil comprising a pressure side and a suction side extending from a larger aerodynamic surface of the blade; and a vortex nest comprising a suction side concavity formed along at least a portion of the suction side of the fluid foil; wherein the vortex nest comprises a progressive fillet between the suction side of the fluid foil and the larger aerodynamic surface, wherein a radius of the progressive fillet progressively increases from a front end to a back end of the fluid foil.

The vortex nest is formed along at least a portion of a suction side of the structure effective to reduce flow separation between the structure and a vortex formed in a flow passing over a leading edge of the structure.

Preferably, at least the portion of the suction side of the fluid foil comprises a conic surface with a vertex proximate a front end of the suction side of the fluid foil.

The nest shape is formed by a progressive fillet between the suction side of the structure and the suction side of the wind turbine blade, wherein the progressive fillet increases in radius along a length of the structure from front to back.

Preferably, the vortex nest comprises a distal portion of the fluid foil curling over the suction side thereof and forming a suction side span-wise concavity from the progressive fillet to the distal portion.

The nest shape is formed partly by a distal portion of the structure curling over the suction side of the structure.

Preferably, the concavity is continuous from the fillet to the distal portion.

Preferably, the vortex generator further comprises a second fluid foil comprising a mirror image of the fluid foil of claim 3 across a mirror plane between the suction sides of the two fluid foils, wherein the two fluid foils are disconnected from each other and diverge from each other from front to back, and wherein the progressive fillets on the suction sides of the two fluid foils converge toward each other from front to back along the larger aerodynamic surface.

Preferably, the vortex generator further comprises a fillet between a trailing edge of the fluid foil and the larger aerodynamic surface, wherein the trailing edge fillet comprises a ridge spanning between the trailing edge and the larger aerodynamic surface.

Preferably, the fluid foil has an angle of incidence of 10 to 40 degrees relative to a free stream flow along the larger aerodynamic surface; and the ridge extends aft from the trailing edge in alignment with a continuous contour from the suction side of the fluid foil.

Preferably, the continuous contour forms the vortex nest with an axis of concavity that diverges from the angle of incidence toward the free stream flow and curves toward a direction of the free stream flow by at least 5 degrees of curvature.

Preferarbly, the fluid foil comprises a relatively thick root portion attached to the larger aerodynamic surface and a relatively thin leading edge extending outward and angled back from a front end of the root portion, wherein the leading edge of the fluid foil has only a single apex as seen in transverse sections taken along at least most of the leading edge.

Preferably, the leading edge has a net curvature from the pressure side toward the suction side of the fluid foil as viewed in the transverse sections.

Preferably, the vortex nest comprises a distal portion of the fluid foil curling over the suction side thereof.

Preferably, the fluid foil further comprises a serrated trailing edge.

Preferably, the vortex nest is formed by at least a portion of the suction side of the fluid foil being concave span-wise, and comprising an axis of concavity that curves away from an angle of incidence of the fluid foil toward a free stream flow at a back end of the fluid foil.

Preferably, each structure further comprises a leading edge with a sweep angle of 50 to 80 degrees relative to a normal line from the suction side of the wind turbine blade, wherein the leading edge comprises only a single apex as viewed in a transverse section of the structure; and a trailing edge with a fillet comprising a ridge aligned with the suction side of the structure and extending a contour of the suction side of the structure that forms the nest shape.

In accordance with a second aspect of the present invention, a vortex generator for a wind turbine blade comprises a diverging pair of airfoils extending from the wind turbine blade in a boundary layer thereof, wherein each of the airfoils has an angle of incidence of 10 to 40 degrees relative to a free stream flow along the wind turbine blade; the vortex generator comprising a vortex nest comprising a suction concavity, wherein the vortex nest comprises a progressive fillet between the suction side of the fluid foil and the larger aerodynamic surface, wherein a radius of the progressive fillet progressively increases from a front end to a back end of the fluid foil; and, wherein the vortex nest is formed on each of the airfoils by at least a portion of a suction side of each airfoil being concave span-wise; and wherein the vortex nest comprises an axis of concavity that diverges from the angle of incidence toward a direction of the free stream flow.

The invention is explained in the following description in view of the drawings that show:
FIG. 1 is a perspective view of a prior art wind turbine blade with vortex generators.
FIG. 2 is a perspective view of a prior art vortex generator.
FIG. 3 is a top view of a pair of diverging prior art vortex generators.
FIG. 4 is a perspective view of an embodiment of the invention.
FIG. 5 is a prior art transverse sectional view taken along line 5-5 of FIG 3.
FIG. 6 is a transverse sectional view of an embodiment of the invention taken along line 6-6 of FIG 4.
FIG. 7 is a transverse sectional view of another embodiment of the invention.
FIG. 8 is a transverse sectional view of another embodiment of the invention.
FIG. 9 is a transverse sectional view of another embodiment of the invention.
FIG 10 is a perspective view of another embodiment of the invention.
FIG 11 is a perspective view of another embodiment of the invention.
FIG 12 is a perspective view of another embodiment of the invention.
FIG 13 is a suction side view of another embodiment of the invention.

The present inventors have recognized that current vortex generator (VG) designs create separated flow regions around the VG that do not contribute to the generation of the beneficial vortex, but increase aerodynamic noise and drag. The inventors have also found that aerodynamic noise is a limiting factor in the design and optimization of wind turbines due to strict regulations around the world. Thus, the present invention was developed to improve wind turbine efficiency, and at the same time, to reduce aerodynamic noise to meet regulations and to minimize site objections.

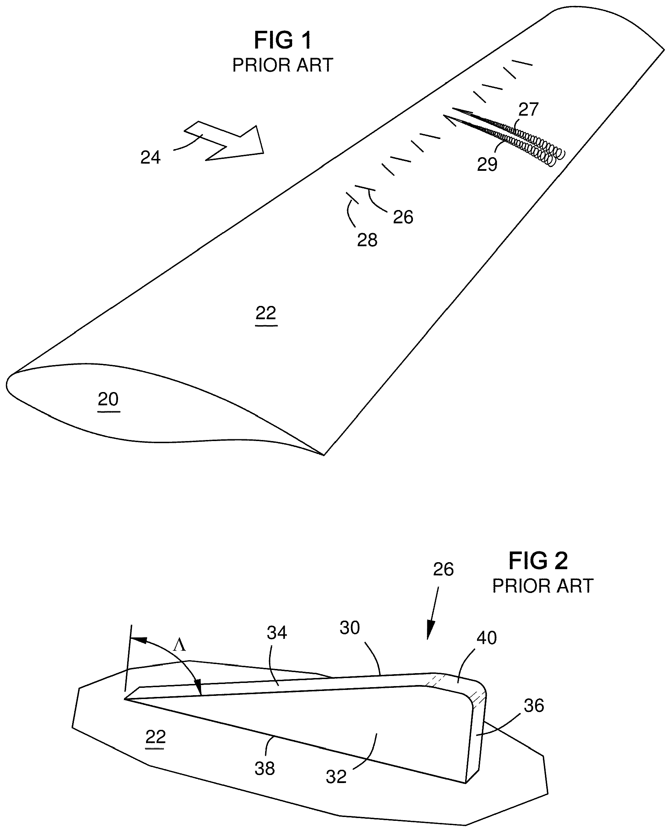

FIG 1 shows a prior art wind turbine blade 20 with a suction side aerodynamic surface 22 on which is mounted a row of pairs of diverging vortex generators 26, 28. A free stream airflow 24 relative to the turbine blade generates counter-rotating vortices 27, 29. These vortices entrain free stream energy into the boundary layer, which delays or prevents flow separation from the aerodynamic surface 22.

FIG 2 shows a prior art vortex generator (VG) 26, which is a small airfoil extending from the larger aerodynamic surface 22 of the wind turbine blade 20. It has a pressure side 30 (hidden), suction side 32, leading edge 34, trailing edge 36, a root portion 38 attached to the larger aerodynamic surface, and a distal portion or tip 40. Such foils are commonly triangular or delta-wing-shaped plates as shown, and have a high leading edge sweep angle Λ, such as 50-80 degrees.

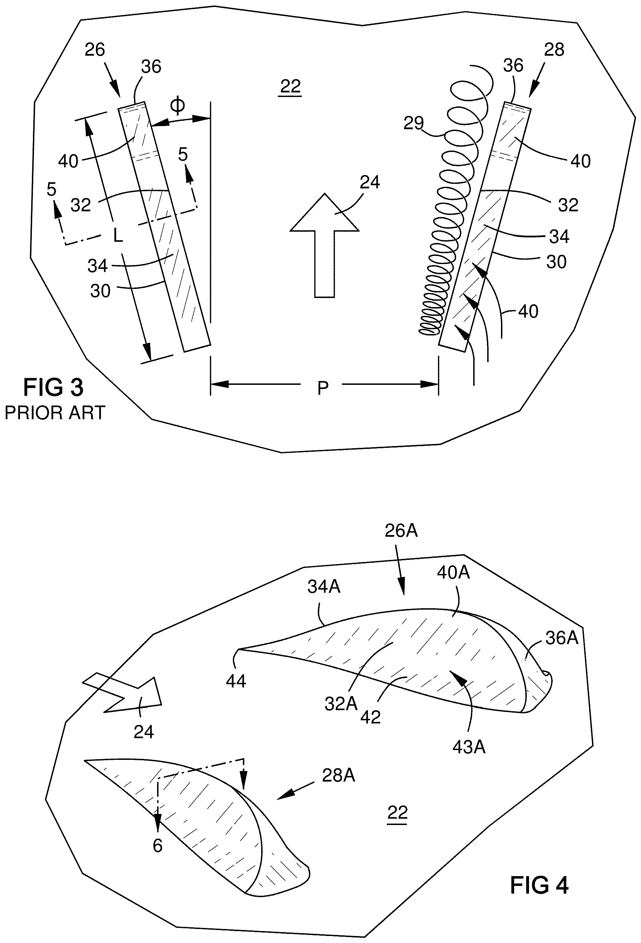

FIG 3 shows a top view of two diverging vortex generators 26, 28, separated by a distance called a pitch P. Each VG is a foil with a length L and an angle of incidence Φ relative to the free stream flow 24. A high incidence angle Φ, such as 10 to 40 degrees, creates a high pressure difference between the pressure and suction sides of the VG. The combination of high incidence angle Φ and high sweep angle Λ (FIG 2) promotes leakage of high pressure flow from the pressure side 30 to the suction side 32. As the local flow 40 wraps around the VG leading edge 34, it forms a shear layer that rolls into a vortical flow structure 29 called a leading edge vortex. The exemplary incidence angle Φ shown in the drawing is 15 degrees.

Noise is generated by angular edges and corners on the VG, and by separation areas or gaps between the suction side of the VG and the vortex 29 that promote noisy waves and eddies. High VG incidence angles Φ, such as 10 to 40 degrees, are beneficial for maintaining the vortex 29 over a range of relative wind speeds. However, separation areas form where the vortex 29 diverges from the highly angled VG toward the free steam 24. In addition, VG trailing edge (TE) waves such as von Karman streets can create noise.

The inventors have recognized that noise can be reduced by providing a vortex nest along the suction side of the VG that eliminates or reduces flow separation areas between the vortex and the VG. The nest is a structure that fits partially around the vortex so that the generally cylindrical or conical shape of the vortex does not abut flat surfaces or inside corners, but instead nests in a mating concave surface that fills the areas that otherwise would be prone to separation.

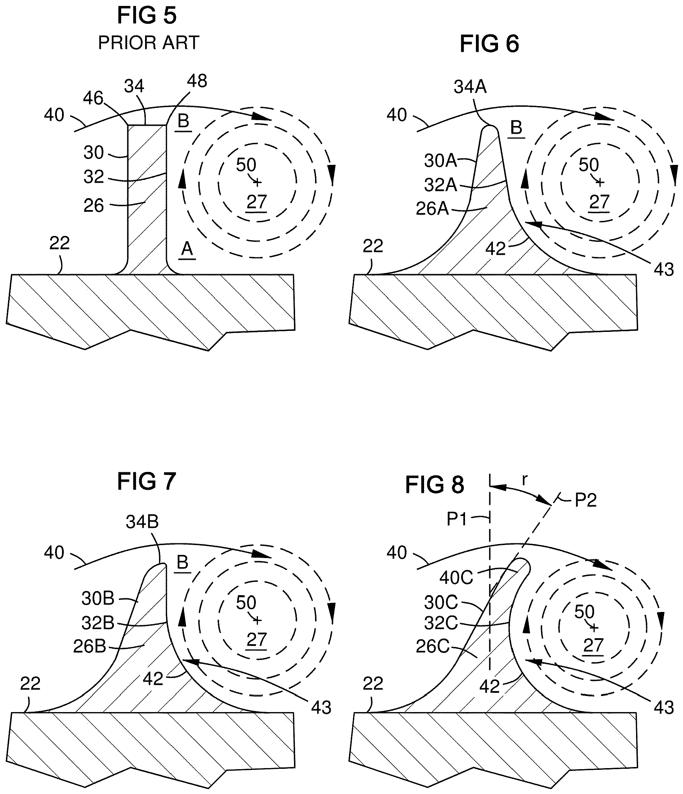

FIG 4 shows a VG 26A in an embodiment that provides a progressive fillet 42 in a root portion of the VG, between the suction side 32A of the VG and the larger aerodynamic surface 22. This fillet has a radius that increases with distance from the front 44 of the VG, providing a concave nest 43A that matches or closely approximates the generally conical shape of the vortex. This embodiment also provides rounded corners, tapered span-wise thickness (FIG 6), and tapered longitudinal thickness to reduce aerodynamic noise by eliminating or reducing flow separations. Herein "span-wise" means generally normal to the larger aerodynamic surface 22. A smooth and thin leading edge reduces momentum losses in developing the vortex. An exemplary manufacturing method is injection molding. A second VG 28A in this embodiment is shown, forming a divergent pair 26A, 28A.

FIG 5 is a transverse sectional view of the prior art VG 26 of FIG 3. Areas A and B are separated flow regions that generate noise. Angular edges or apexes 46 and 48 also generate noise and drag along the leading and trailing edges without contributing to the beneficial vortex 27. A vortex centerline 50 is indicated for reference.

FIG 6 is a transverse sectional view of a VG embodiment 26A of the invention, with a pressure side 30A, suction side 32A, leading edge 34A, and local airflow 40.
This embodiment has two improvements over the prior art. Firstly, the progressive fillet 42 eliminates gap A of FIG 5 by a progressively increasing radius that matches the progressively increasing vortex 27, providing a vortex nest 43. For example, the fillet radius may be designed to be substantially or approximately centered on the vortex centerline 50. Secondly, the leading edge 34A has only one apex in transverse sectional views along at least most of the leading edge. This minimizes disruptions to the flow 40 caused by multiple apexes 46, 48 as in FIG 5 that generate noise.

FIG 7 is a transverse sectional view of a VG embodiment 26B of the invention.
This embodiment reduces gap B compared to FIG 6 by means of net curvature or asymmetry leaning from the pressure side 30B toward the suction side 32B of the VG as viewed in transverse sections along at least most of the leading edge 34B.

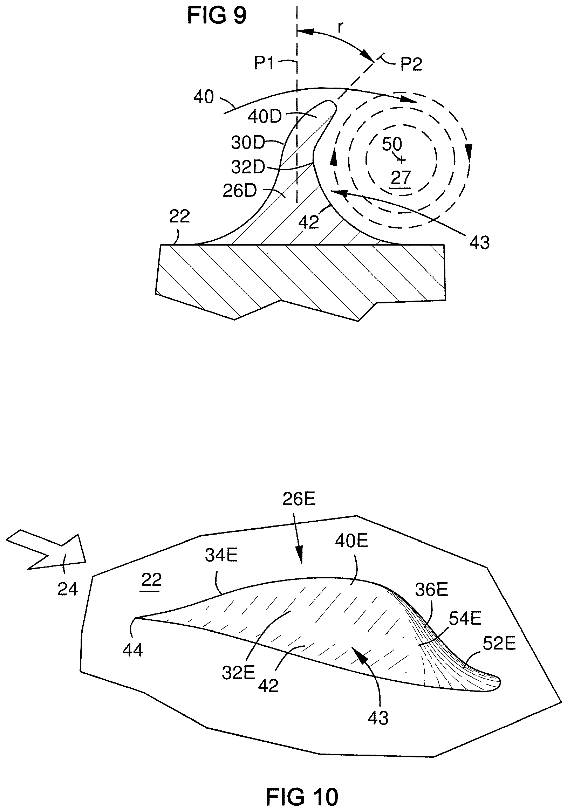

FIG 8 is a transverse sectional view of a VG embodiment 26C of the invention with a pressure side 30C, suction side 32C, distal portion 40C, and local airflow 40. This embodiment eliminates gap B by the distal portion 40C curling over the suction side 32C, thus forming a suction side concavity or vortex nest 43 as seen in transverse section. The curl of this embodiment may be continuous from the progressive fillet 42 to the distal portion 40C as shown, or it may be formed as a main VG airfoil portion and a dihedral tip as in FIG 9. In either case, a dihedral angle r may be defined between a plane P1 normal to the larger aerodynamic surface 22 and a plane P2 of the distal portion 40C, 40D of the VG. If the curl is continuous as in FIG 8, the second plane P2 is defined tangent to the distal portion of the VG as shown. An optimum range for this dihedral angle is 20 to 70 degrees.

FIG 9 is a transverse sectional view of a VG embodiment 26D of the invention with a pressure side 30D, suction side 32D, distal portion 40D, and local airflow 40. This embodiment eliminates gap B by a tip portion 40D of the VG that curls or leans over the suction side 32C with a dihedral angle r, thus forming a suction side concavity or vortex nest 43 as seen in transverse section.

A high leading edge sweep angle Λ (FIG 2), such as 50to 80 degrees, induces the vortex 27 to form by mid-span of the VG. The distal portion or tip 40 of such VG does not contribute to the vortex, and only increases drag and noise due to flow separation. However, the embodiments of FIGs 8 and 9 promote flow rollup around the leading edge by providing a geometric path for the roll to follow. Thus the distal portion 40C, 40D of the VGs of FIGs 8 and 9 contributes to the vortex 27 and contains and directs it, making it smaller and more intense. Reducing the vortex size increases its wave frequencies, which attenuate more rapidly in the air, thus effectively reducing the distance of threshold noise.

FIG 10 is a perspective view of a VG embodiment 26E of the invention with a suction side 32E, leading edge 34E, trailing edge 36E, distal portion 40E, and free stream flow 24. A trailing edge (TE) fillet 52E may be blended with the trailing edge 36E to increase the effective root chord of the VG, which increases the VG Reynolds number and the strength of the induced leading edge vortex. A ridge 54E may be formed by the trailing edge 36E and the fillet 52E having a single apex in chord-wise or span-wise sectional views thereof. This ridge may be aligned with the leading edge 34E or alternately it may be aligned with the suction side 32E as indicated at 54E, thus extending the vortex 43 nest aft. The ridge for example may be shaped as a continuation of the leading edge shape 34A or 34B of FIGs 6 and 7.

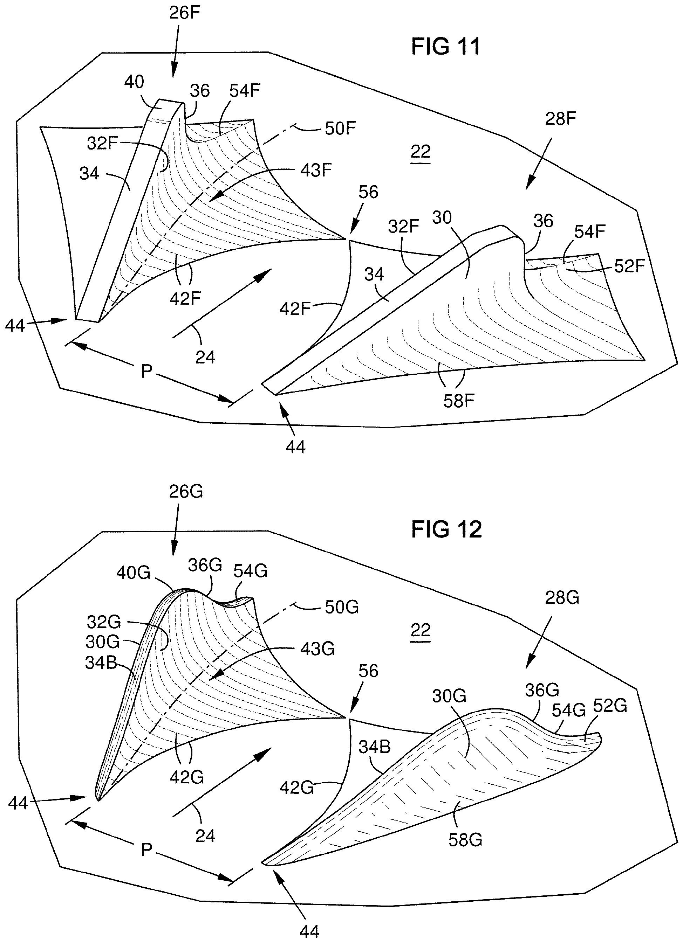

FIG 11 is a perspective view of an embodiment of the invention showing a pair of diverging vortex generators 26F, 28F separated by a distance P between the front ends 44 of their leading edges 34. A progressive fillet 42F on the suction side 32F is illustrated by dashed contour lines. Progressive fillets 42F on the suction sides 32F of two VGs 26F, 28F are illustrated by dashed contour lines. These fillets converge toward each other from front to back along the larger aerodynamic surface 22. This convergence 56 accelerates the flow between the VGs by the Venturi Effect and Bernoulli Principle, which increases the pressure difference across each VG, providing a stronger leading edge vortex. The pressure-side fillet 58 shown with dashed contour lines on the pressure side 30 of the VG 28F may or may not be progressive, and it may be smaller than the fillet 42F on the suction side since it does not need to converge with a corresponding fillet of an adjacent VG.

A ridge 54F may be formed by the trailing edge 36F and the TE fillet 52F. This ridge may extend aft from the trailing edge 36F in alignment with the suction side 32F. It may extend a contour of the suction side 32F, thus providing a smooth vortex nest 43F. This nest may have a generally conical shape with an axis that diverges from the incidence angle of the VG toward the free stream 24. As a further enhancement, the nest 43F may have an axis of concavity 50F (meaning a curve drawn along a centerline or focus of the fillet 42F) that curves toward the free stream direction 24 by at least 5 degrees. This curvature causes the vortex nest to guide or follow the vortex as it curves toward the free stream 24 away from the incidence angle of the VG (FIG 3). This allows a smoother direction change and reduces gaps and noise.

FIG 12 is a perspective view of an embodiment of the invention showing a pair of diverging vortex generators 26G, 28G separated by a distance P between front ends 44 of their leading edges 34B. As in FIG 11, a progressive fillet 42G on the suction side 32G is illustrated by dashed contour lines. A ridge 54G may be formed by the trailing edge 36E and the TE fillet 52E having a single apex in chord-wise or span-wise sectional views. This ridge may extend aft from the trailing edge 36G in alignment with the suction side 32G. It may extend a contour of the suction side 32G, thus providing a smooth vortex nest 43G. This nest may have a generally conical shape with an axis that diverges from the incidence angle of the VG toward the free stream 24. As a further enhancement, the nest 43G may have an axis of concavity 50G that curves toward the free stream direction 24 by at least 5 degrees. Each leading edge 34B may have net curvature or asymmetry leaning from the pressure side 30G toward the suction side 32G of the VG as viewed in transverse sections along at least most of the leading edge 34B as shown for example in FIG 7.

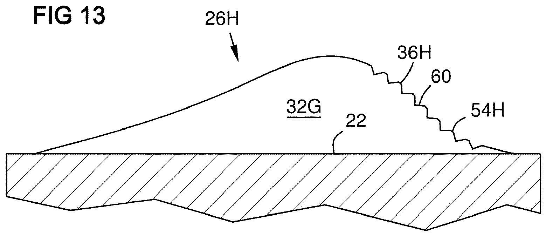

FIG 13 is a suction side view of a VG embodiment 26H with serrations 60 along the trailing edge 36H. The serrations may continue along the trailing edge fillet ridge 54G, if any. Although the main flow pattern in a vortex generator is the leading edge vortex 27 (previously shown), there is also flow over the trailing edge 36H. Since the flow over the suction side 32G is accelerated by the leading edge vortex, there can be a strong a pressure difference at the trailing edge 36H in some designs. This can create a coherent pressure wave that is a source of aerodynamic noise. Serrations such as chevron-shaped cuts add a variety of smaller wave structures that disrupt the coherence of the trailing edge pressure wave, and reduce noise. This effect also reduces disruption of the leading edge vortex 27 by trailing edge pressure waves such as von Karman streets.

The embodiments described and shown herein can be used separately or combined. For example, the serrations of FIG 13 may be added to the VGs 26G, 28G of FIG 12. As another example, the leading edge 34B of FIG 7 was combined with the progressive fillet 42F of FIG 11 in the embodiment of FIG 12.

The invention provides a vortex nest that reduces noisy pockets of flow separation. It reduces separation between the vortex and flat surfaces and inside corners. In some embodiments it also reduces separation by reducing the number of abrupt outside edges. It reduces momentum losses due to flow separation and friction by specifically contouring portions of the VG that do not contribute to generating the vortex but only increase drag and noise. It also optimizes the generation of the beneficial leading edge vortex by reducing the mixing of trailing separated flow with the vortex.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the scope of the appended claims.

## Claims

1. A vortex generator for a wind turbine blade comprising:
a fluid foil (26) comprising a pressure side (30) and a suction side (32) extending from a larger aerodynamic surface (22) of the blade; said fluid foil (26) forming a vortex nest comprising a suction side r concavity (43A) formed along at least a portion of the suction side of the fluid foil (26);
wherein the vortex nest comprises a progressive fillet (42) between the suction side (32A) of the fluid foil and the larger aerodynamic surface (22) wherein a radius of the progressive fillet (42) progressively increases from a front end (44) to a back end of the fluid foil.

2. The vortex generator of claim 1, wherein at least the portion of the suction side of the fluid foil comprises a conic surface with a vertex proximate a front end of the suction side of the fluid foil.

3. The vortex generator of claim 1, or claim 2, wherein the vortex nest comprises a distal portion of the fluid foil curling over the suction side thereof and forming a suction side span-wise concavity from the progressive fillet to the distal portion.

4. The vortex generator of claim 3, wherein the concavity is continuous from the fillet to the distal portion.

5. The vortex generator of any of claims 1 to 4, further comprising a second fluid foil comprising a mirror image of the fluid foil of claim 1 across a mirror plane between the suction sides of the two fluid foils, wherein the two fluid foils are disconnected from each other and diverge from each other from front to back, and wherein the progressive fillets on the suction sides of the two fluid foils converge toward each other from front to back along the larger aerodynamic surface.

6. The vortex generator of any of claims 1 to 5, further comprising a fillet between a trailing edge of the fluid foil and the larger aerodynamic surface, wherein the trailing edge fillet comprises a ridge spanning between the trailing edge and the larger aerodynamic surface.

7. The vortex generator of claim 6, wherein:
the fluid foil has an angle of incidence of 10 to 40 degrees relative to a free stream flow along the larger aerodynamic surface; and
the ridge extends aft from the trailing edge in alignment with a continuous contour from the suction side of the fluid foil.

8. The vortex generator of claim 7, wherein the continuous contour forms the vortex nest with an axis of concavity that diverges from the angle of incidence toward the free stream flow and curves toward a direction of the free stream flow by at least 5 degrees of curvature.

9. The vortex generator of any preceding claim, wherein the fluid foil comprises a relatively thick root portion attached to the larger aerodynamic surface and a relatively thin leading edge extending outward and angled back from a front end of the root portion, wherein the leading edge of the fluid foil has only a single apex as seen in transverse sections taken along at least most of the leading edge.

10. The vortex generator of claim 9, wherein the leading edge has a net curvature from the pressure side toward the suction side of the fluid foil as viewed in the transverse sections.

11. The vortex generator of any preceding claim, wherein the vortex nest comprises a distal portion of the fluid foil curling over the suction side thereof.

12. The vortex generator of any preceding claim, wherein the fluid foil further comprises a serrated trailing edge.

13. The vortex generator of claim 1, wherein the vortex nest is formed by at least a portion of the suction side of the fluid foil being concave span-wise, and comprising an axis of concavity that curves away from an angle of incidence of the fluid foil toward a free stream flow at a back end of the fluid foil.

14. The vortex generator of claim 1, wherein each structure further comprises:
a leading edge with a sweep angle of 50 to 80 degrees relative to a normal line from the suction side of the wind turbine blade, wherein the leading edge comprises only a single apex as viewed in a transverse section of the structure; and
a trailing edge with a fillet comprising a ridge aligned with the suction side of the structure and extending a contour of the suction side of the structure that forms the nest shape.

15. A vortex generator for a wind turbine blade, the vortex generator comprising:
a diverging pair of airfoils (26,28) extending from the wind turbine blade in a boundary layer thereof;
wherein each of the airfoils has an angle of incidence of 10 to 40 degrees relative to a free stream flow along the wind turbine blade;
each of the airfoils comprising a vortex nest comprising a suction concavity (43A), wherein the vortex nest comprises a progressive fillet (42) between the suction side (32A) of the fluid foil and the larger aerodynamic surface (22), wherein a radius of the progressive fillet progressively increases from a front end (44) to a back end of the fluid foil.; and,
wherein the vortex nest is formed on each of the airfoils by at least a portion of a suction side of each airfoil being concave span-wise; and
wherein the vortex nest comprises an axis of concavity that diverges from the angle of incidence toward a direction of the free stream flow.

## Patentansprüche

1. Wirbelgenerator für ein Windturbinenblatt, der Folgendes umfasst:
ein Fluidprofil (26) mit einer Druckseite (30) und einer Saugseite (32), das von einer größeren aerodynamischen Fläche (22) des Blatts aus verläuft,
wobei das Fluidprofil (26) ein Wirbelnest mit einer Saugseitenkonkavität (43A) bildet, die zumindest an einem Abschnitt der Saugseite des Fluidprofils (26) entlang ausgebildet ist,
wobei das Wirbelnest zwischen der Saugseite (32A) des Fluidprofils und der größeren aerodynamischen Fläche (22) einen kontinuierlichen Übergang (42) umfasst,
wobei sich ein Radius des kontinuierlichen Übergangs (42) von einem vorderen Ende (44) aus bis zu einem hinteren Ende des Fluidprofils hin kontinuierlich vergrößert.

2. Wirbelgenerator nach Anspruch 1, bei dem zumindest der Abschnitt der Saugseite des Fluidprofils eine konische Fläche mit einer Spitze in der Nähe eines vorderen Endes der Saugseite des Fluidprofils umfasst.

3. Wirbelgenerator nach Anspruch 1 oder 2, bei dem das Wirbelnest einen distalen Abschnitt des Fluidprofils umfasst, der sich über die Saugseite davon wölbt und von dem kontinuierlichen Übergang aus bis hin zu dem distalen Abschnitt in Spannweitenrichtung eine saugseitige Konkavität bildet.

4. Wirbelgenerator nach Anspruch 3, bei dem die Konkavität von dem Übergang aus bis hin zu dem distalen Abschnitt durchgängig ist.

5. Wirbelgenerator nach einem der Ansprüche 1 bis 4, der ferner ein zweites Fluidprofil umfasst, das auf einer Spiegelebene zwischen den Saugseiten der beiden Fluidprofile ein Spiegelbild des Fluidprofils aus Anspruch 1 umfasst, wobei die beiden Fluidprofile voneinander getrennt sind und von vorn nach hinten voneinander divergieren und wobei die kontinuierlichen Übergänge auf den Saugseiten der beiden Fluidprofile entlang der größeren aerodynamischen Fläche von vorn nach hinten zueinander konvergieren.

6. Wirbelgenerator nach einem der Ansprüche 1 bis 5, der ferner zwischen einer Hinterkante des Fluidprofils und der größeren aerodynamischen Fläche einen Übergang umfasst, wobei der Hinterkantenübergang eine die Hinterkante und die größere aerodynamische Fläche überspannende Rippe umfasst.

7. Wirbelgenerator nach Anspruch 6, bei dem:
das Fluidprofil in Bezug auf eine ungehinderte Luftströmung entlang der größeren aerodynamischen Fläche einen Anströmwinkel von 10 bis 40 Grad aufweist und
die Rippe von der Hinterkante aus an einer durchgängigen Kontur ausgerichtet von der Saugseite des Fluidprofils aus nach hinten verläuft.

8. Wirbelgenerator nach Anspruch 7, bei dem die durchgängige Kontur das Wirbelnest mit einer Konkavitätsachse bildet, die von dem Anströmwinkel hin zu der ungehinderten Luftströmung divergiert und in eine Richtung der ungehinderten Luftströmung eine Kurve mit einem Krümmungswinkel von mindestens 5 Grad bildet.

9. Wirbelgenerator nach einem vorhergehenden Anspruch, bei dem das Fluidprofil einen relativ dicken Wurzelabschnitt, der an der größeren aerodynamischen Fläche angebracht ist, und eine relativ dünne Vorderkante umfasst, die nach außen hin verläuft und an einem vorderen Ende des Wurzelabschnitts abgewinkelt ist, wobei die Vorderkante des Fluidprofils bei Betrachtung von Querschnitten entlang zumindest eines Großteils der Vorderkante nur einen einzigen Scheitelpunkt aufweist.

10. Wirbelgenerator nach Anspruch 9, bei dem die Vorderkante bei Betrachtung der Querschnitte eine spezifische Krümmung von der Druckseite zur Saugseite des Fluidprofils hin aufweist.

11. Wirbelgenerator nach einem vorhergehenden Anspruch, bei dem das Wirbelnest einen distalen Abschnitt des Fluidprofils umfasst, der sich über die Saugseite davon wölbt.

12. Wirbelgenerator nach einem vorhergehenden Anspruch, bei dem das Fluidprofil ferner eine gezahnte Hinterkante umfasst.

13. Wirbelgenerator nach Anspruch 1, bei dem das Wirbelnest dadurch gebildet wird, dass zumindest ein Abschnitt der Saugseite des Fluidprofils in Spannweitenrichtung konkav ist und eine Konkavitätsachse umfasst, die sich von einem Anströmwinkel des Fluidprofils weg zu einer ungehinderten Luftströmung an einem hinteren Ende des Fluidprofils hin krümmt.

14. Wirbelgenerator nach Anspruch 1, bei dem jede Konstruktion ferner Folgendes umfasst:
eine Vorderkante mit einem Pfeilwinkel von 50 bis 80 Grad bezüglich einer Normalen von der Saugseite des Windturbinenblatts, wobei die Vorderkante bei Betrachtung eines Querschnitts durch die Konstruktion nur einen einzigen Scheitelpunkt umfasst, und
eine Hinterkante mit einem Übergang, der eine Rippe umfasst, welche an der Saugseite der Konstruktion ausgerichtet ist und eine Kontur der Saugseite der Konstruktion verlängert, welche die Nestform bildet.

15. Wirbelgenerator für ein Windturbinenblatt, der Folgendes umfasst:
ein Paar divergierende Profile (26, 28), die von dem Windturbinenblatt aus in einer Grenzschicht davon verlaufen,
wobei jedes der Profile einen Anströmwinkel von 10 bis 40 Grad in Bezug auf eine ungehinderte Luftströmung entlang des Windturbinenblatts aufweist,
wobei jedes der Profile ein Wirbelnest mit einer Saugkonkavität (43A) umfasst,
wobei das Wirbelnest zwischen der Saugseite (32A) des Fluidprofils und der größeren aerodynamischen Fläche (22) einen kontinuierlichen Übergang (42) umfasst,
wobei sich ein Radius des kontinuierlichen Übergangs von einem vorderen Ende (44) aus bis zu einem hinteren Ende des Fluidprofils hin kontinuierlich vergrößert und
wobei das Wirbelnest an jedem der Profile dadurch gebildet wird, dass zumindest ein Abschnitt einer Saugseite jedes Profils in Spannweitenrichtung konkav ist, und
wobei das Wirbelnest eine Konkavitätsachse umfasst, die von dem Anströmwinkel in eine Richtung der ungehinderten Luftströmung divergiert.

## Revendications

1. Générateur de vortex pour pale d'éolienne comprenant :
une ailette (26) comprenant un intrados (30) et un extrados (32) s'étendant depuis une plus grande surface aérodynamique (22) de la pale,
ladite ailette (26) formant une poche à vortex comprenant, côté extrados, une concavité (43A) formée le long d'au moins une partie de l'extrados de l'ailette (26),
étant entendu que la poche à vortex consiste en un congé de raccordement progressif (42) entre l'extrados (32A) de l'ailette et la plus grande surface aérodynamique (22), un rayon du congé de raccordement progressif (42) augmentant progressivement depuis une extrémité avant (44) jusqu'à une extrémité arrière de l'ailette.

2. Générateur de vortex selon la revendication 1, dans lequel au moins la partie de l'extrados de l'ailette comprend une surface conique comportant un vertex à proximité d'une extrémité avant de l'extrados de l'ailette.

3. Générateur de vortex selon la revendication 1 ou la revendication 2, dans lequel la poche à vortex comprend une partie distale de l'ailette s'enroulant par-dessus l'extrados de celle-ci et formant, côté extrados, dans le sens de l'envergure, une concavité allant du congé de raccordement progressif à la partie distale.

4. Générateur de vortex selon la revendication 3, dans lequel la concavité est continue du congé de raccordement à la partie distale.

5. Générateur de vortex selon l'une quelconque des revendications 1 à 4, comprenant par ailleurs une seconde ailette consistant en une image symétrique de l'ailette selon la revendication 1 par rapport à un plan de symétrie entre les deux extrados des deux ailettes, étant entendu que les deux ailettes sont dissociées l'une de l'autre et qu'elles divergent l'une par rapport à l'autre d'avant en arrière, et que les congés de raccordement progressifs côté extrados des deux ailettes convergent l'un vers l'autre d'avant en arrière le long de la plus grande surface aérodynamique.

6. Générateur de vortex selon l'une quelconque des revendications 1 à 5, comprenant par ailleurs un congé de raccordement entre un bord de fuite de l'ailette et la surface aérodynamique plus grande, le congé de raccordement du bord de fuite consistant en une arête s'étendant entre le bord de fuite et la plus grande surface aérodynamique.

7. Générateur de vortex selon la revendication 6, dans lequel :
l'ailette a un angle d'incidence de 10 à 40 degrés par rapport à un écoulement libre le long de la plus grande surface aérodynamique, et
l'arête s'étend vers l'aval depuis le bord de fuite dans l'alignement d'un contour continu à partir de l'extrados de l'ailette.

8. Générateur de vortex selon la revendication 7, dans lequel le contour continu forme la poche à vortex suivant un axe de concavité qui diverge par rapport à l'angle d'incidence en direction de l'écoulement libre et s'incurve d'au moins 5 degrés de courbure dans une direction de l'écoulement libre.

9. Générateur de vortex selon l'une quelconque des revendications précédentes, dans lequel l'ailette comprend une partie formant emplanture relativement épaisse attachée à la plus grande surface aérodynamique et un bord d'attaque relativement mince s'étendant vers l'extérieur et faisant un angle vers l'arrière à partir d'une extrémité avant de la partie formant emplanture, le bord d'attaque de l'ailette ayant seulement un apex simple tel que vu suivant des coupes transversales prises sur au moins la majeure partie du bord d'attaque.

10. Générateur de vortex selon la revendication 9, dans lequel le bord d'attaque présente une courbure nette allant de l'intrados vers l'extrados de l'ailette telle que vue en coupes transversales.

11. Générateur de vortex selon l'une quelconque des revendications précédentes, dans lequel la poche à vortex comprend une partie distale de l'ailette se recourbant par-dessus l'extrados de celle-ci.

12. Générateur de vortex selon l'une quelconque des revendications précédentes, dans lequel l'ailette comprend par ailleurs un bord de fuite dentelé.

13. Générateur de vortex selon la revendication 1, dans lequel la poche à vortex est formée par au moins une partie de l'extrados de l'ailette, concave dans le sens de l'envergure, et comprenant un axe de concavité qui s'incurve en s'écartant d'un angle d'incidence de l'ailette vers un écoulement libre à une extrémité arrière de l'ailette.

14. Générateur de vortex selon la revendication 1, dans lequel chaque structure comprend par ailleurs :
un bord d'attaque présentant un angle de flèche de 50 à 80 degrés par rapport à une normale partant de l'extrados de la pale d'éolienne, le bord d'attaque comprenant seulement un apex simple tel que vu suivant une coupe transversale de la structure, et
un bord de fuite comportant un congé de raccordement comprenant une arête alignée sur l'extrados de la structure et prolongeant un contour de l'extrados de la structure qui forme la configuration de la poche.

15. Générateur de vortex pour pale d'éolienne, le générateur de vortex comprenant :
une paire divergente de profils aérodynamiques (26, 28) s'étendant depuis la pale d'éolienne dans une couche limite de celle-ci,
étant entendu que chacun des profils aérodynamiques a un angle d'incidence de 10 à 40 degrés par rapport à un écoulement libre le long de la pale d'éolienne, chacun des profils aérodynamiques comprenant une poche à vortex comportant, côté extrados, une concavité (43A) ;
étant entendu que la poche à vortex comprend un congé de raccordement progressif (42) entre l'extrados (32A) de l'ailette et la plus grande surface aérodynamique (22), un rayon du congé de raccordement progressif augmentant progressivement depuis une extrémité avant (44) jusqu'à une extrémité arrière de l'ailette, et
étant entendu que la poche à vortex est formée sur chacun des profils aérodynamiques par au moins une partie d'un extrados de chaque profil aérodynamique, concave dans le sens dans l'envergure, et
étant entendu que la poche à vortex a un axe de concavité qui diverge par rapport à l'angle d'incidence dans une direction de l'écoulement libre.
